# EUROPÄISCHE PATENTSCHRIFT

(11) **EP 3 560 153 B1**
(45) Veröffentlichungstag und Bekanntmachung des Hinweises auf die Patenterteilung: **11.01.2023**
(21) Anmeldenummer: 17797621.4
(22) Anmeldetag: 09.11.2017
(51) Int. Cl.: H04L 47/24, H04L 47/2416, H04L 12/40

(54) **VERFAHREN ZUM BETREIBEN EINER DATENVERARBEITUNGSANLAGE, DATENVERARBEITUNGSANLAGE**
METHOD FOR OPERATING A DATA PROCESSING SYSTEM, AND DATA PROCESSING SYSTEM
PROCÉDÉ POUR FAIRE FONCTIONNER UN DISPOSITIF DE TRAITEMENT DE DONNÉES ET DISPOSITIF DE TRAITEMENT DE DONNÉES

(30) Priorität: 21.12.2016 DE 102016225755
(43) Veröffentlichungstag der Anmeldung: 30.10.2019
(73) Patentinhaber: Robert Bosch GmbH, 70442 Stuttgart (DE)
(72) Erfinder: ZYMERI, Gafur, 30952 Ronnenberg (DE); POEHNL, Michael, 75449 Wurmberg (DE); DOERING, Michael Ernst, 71272 Renningen (DE); WAGNER, Marco Andreas, 71229 Leonberg (DE); SCHNEIDER, Klaus, 71640 Ludwigsburg (DE)
(86) Internationale Anmeldenummer: PCT/EP2017/078734
(87) Internationale Veröffentlichungsnummer: WO 2018/114126

(56) Entgegenhaltungen:
- EP-A1- 1 751 925
- US-A1- 2004 083 272
- US-A1- 2006 171 410
- US-B2- 7 289 446
- LIVANI M A ET AL: "EDF Consensus on CAN Bus Access for Dynamic Real-Time Applications", INTERNET CITATION, 1998, XP002235283, Gefunden im Internet: URL:http://www.informatik.uni-ulm.de/rs/pr ojekte/core/ [gefunden am 2003-03-19]

## Beschreibung

### Stand der Technik

Die Erfindung geht aus von einem Verfahren bzw. einem Computerprogramm zum Betreiben einer Datenverarbeitungsanlage und einer Datenverarbeitungsanlage.

EP 1 751 925 A1, US 7 289 446 B2, Livani M. A. et. AI. "EDF Consensus on CAN Bus Access for Dynamic Real-Time Applications", (HTTP://www.informatik.uni-ulm.de/rs/projekte /core/), US 2006/171410 A1 und US 2004/083272 A1 offenbaren Aspekte von derartigen Datenverarbeitungsanlagen.

Kommunikationspfade zwischen Applikationen, die auf Steuergeräten ablaufen, welche durch ein Controller Area Network, CAN, verbundenen sind werden im Rahmen einer so genannten Kommunikationsmatrix zur Entwicklungszeit vorgeplant. Dies führt zu einer statischen Kommunikation zwischen den CAN Steuergeräten. Über eine Vorgabe von Kopfteilen für auszutauschende Botschaften zur Entwicklungszeit werden implizit auch Prioritäten für das Senden einzelner Botschaften vorgeplant. Beide Vorgänge dienen dazu die Buslast sowie die maximale Latenz der zu versendenden Nachrichten zu regulieren. Eine dynamische Anpassung von Kommunikationsmatrizen und Kommunikationspfaden bei gleichzeitiger Garantie von maximalen Buslasten und maximalen Latenzen wäre demgegenüber wünschenswert.

### Offenbarung der Erfindung

Das Verfahren und die Vorrichtung mit den Merkmalen der unabhängigen Ansprüche ermöglicht durch technische Maßnahmen einen Zugriff und die Priorität eines derartigen Zugriffs auf einen Kommunikationspfad zu beeinflussen.

Bezüglich des Verfahrens zum Aufbau von Botschaften für eine Datenverarbeitungsanlage, insbesondere für Kraftfahrzeuge, in der Botschaften über mindestens einen Kommunikationspfad der Datenverarbeitungsanlage übertragbar sind, ist vorgesehen, dass die Botschaften einen Kopfteil umfassen, der zumindest teilweise als Identifizierer der Botschaft ausgebildet ist, der zumindest eine Priorität festlegt und wobei die Botschaft eine Kennung der Botschaft enthält, wobei durch die Priorität der Zugang zum Kommunikationspfad bestimmt ist, wobei die Priorität der Botschaft abhängig von einer Regel bestimmt wird, die der Kennung der Botschaft einen Wert für die Priorität zuordnet. Die Regel bestimmt die Priorität. Eine Veränderung der Regel verändert die Priorität. Da die Priorität einer Botschaft abhängig von der Kennung der Botschaft und der Regel bestimmt wird, ist eine Änderung der Priorität während der Kommunikation durch Änderung der Regel möglich. Hierdurch wird eine hohe Flexibilität des Netzwerks zur Laufzeit bei einer garantierten Einhaltung von maximalen Buslasten und maximalen Latenzen ermöglicht. Damit wird die Verlässlichkeit einer statischen Planung mit der Flexibilität einer dynamischen Kommunikationsmethodik verbunden. Gegenüber den Netzwerkmanagement-Technologien wie Software Defined Networking, SDN, und Time Sensitive Networking, TSN besteht der Vorteil, dass im Gegensatz zu SDN und TSN eine Umsetzung direkt auf einem Controller Area Network, CAN, nach ISO 11898 möglich ist. Dadurch ist ein Überlastschutz nicht nur wie bislang für Ethernet- und Internet Protocol basierte Kommunikationssysteme sondern auch für CAN-basierte Netze zu realisieren. Dies ermöglicht neben einer Umsetzung auf einem einzelnen oder mehreren verbundenen CAN-Netzwerken auch eine durchgängige Planung und Umsetzung über Ethernet- und CAN-basierte Fahrzeugnetzwerke hinweg.

Vorzugsweise wird die Kennung der Botschaft bestimmt, und der Zugang zum Kommunikationspfad abhängig von der Kennung der Botschaft gewährt oder verweigert. Die Priorität aus dem Kopfteil wird in CAN Bussystemen nach ISO 11898 zur Arbitrierung von Botschaften verwendet. Durch die Verwendung der Priorität ist das Verfahren kompatibel zu dieser Arbitrierung. Zusätzlich dazu wird der Zugang zum CAN Bus abhängig von der Kennung der Botschaft gesteuert. Dies bietet zusätzliche Flexibilität.

Vorzugsweise löst eine erste Anfrage nach dem Kommunikationspfad eine zweite Anfrage nach einer Kommunikationsressource für den Kommunikationspfad aus, wobei die Regel abhängig von der zweiten Anfrage bestimmt wird. Regeln können somit für verschiedene Kommunikationspfade verwendet werden, die ähnliche oder dieselben Kommunikationsressourcen benötigen.

Vorzugsweise stellt eine Applikation Nutzdaten für die Botschaft bereit, wobei die erste Anfrage durch die Applikation erfolgt. Die Applikation verfügt über Kenntnisse über den gewünschten Kommunikationspfad. Kenntnisse über Kommunikationsressourcen, die zur Realisierung des gewünschten Kommunikationspfad erforderlich sind, werden davon getrennt. Diese Abstraktion ermöglicht es, eine Applikation für die Bearbeitung von Botschaften unabhängig von Kenntnissen über die Kommunikationsressourcen zu entwickeln.

Vorzugsweise empfängt eine Abstraktionsschicht die erste Anfrage nach dem Kommunikationspfad, bestimmt abhängig von der ersten Anfrage eine Kommunikationsressource für den Kommunikationspfad, und sendet die zweite Anfrage nach der Kommunikationsressource. Die Abstraktionsschicht setzt damit angefragte Kommunikationspfade mittels momentan verfügbarer Kommunikationsressourcen unabhängig von der Applikation um.

Vorzugsweise empfängt eine Verwaltungseinrichtung die zweite Anfrage nach der Kommunikationsressource, prüft die Verfügbarkeit der Kommunikationsressource, bestimmt die Regel abhängig von der zweiten Anfrage nach der Kommunikationsressource, und sendet die Regel in einer Anweisung. Die Verwaltungseinrichtung ermöglicht die Integration eines Software Defined Networking, SDN, basierten oder Time Sensitive Networking, TSN, basierten Fahrzeugkommunikationsnetzwerks und eines Controller Area Network, CAN, basierten System. Die vorteilhaften Eigenschaften der Kombination von SDN mit TSN, beispielsweise flexible Rekonfiguration zur Laufzeit unter Einhaltung von Dienstgütegarantien, werden durch Übersetzungs- und Anpassungsmechanismen auch in den CAN basierten Teil verfügbar gemacht werden, so dass diese Eigenschaften in einem Gesamtsystem aus SDN/TSN und CAN Teilen durchgängig zwischen Endsystemen in den verschiedenen Teilen genutzt werden können.

Vorzugsweise wird mindestens eine Regel für mindestens einen Kommunikationspfad verändert, wobei der mindestens einen Kommunikationspfad bereits zur Übertragung von Botschaften verwendet wird, und gemäß der veränderten Regel entweder das Übertragen von Botschaften gestoppt wird, oder mit veränderter Priorität erfolgt. Dadurch wird erforderlichenfalls eine bestehende Konfiguration verändert, um Ressourcen für einen neuen Konfigurationspfad bereitzustellen. Dazu wird durch die Verwaltungseinrichtung in einem CAN Netzwerk in den Buszugriff und die Buszugriffpriorität eingegriffen, um beispielsweise aktiv die Arbitrierung und damit die Buslast und Latenzen zu beeinflussen. Vorzugsweise wird dazu der aktuelle Zustand eines Netzwerkknotens des CAN Netzwerks beobachtet oder überwacht.

Bezüglich der Datenverarbeitungsanlage sind, insbesondere für Kraftfahrzeuge, Botschaften über mindestens einen Kommunikationspfad der Datenverarbeitungsanlage übertragbar, wobei die Botschaften einen Kopfteil umfassen, der zumindest teilweise als Identifizierer der Botschaft ausgebildet ist, der zumindest eine Priorität festlegt und wobei die Botschaft eine Kennung der Botschaft enthält, wobei durch die Prioriät der Zugang zum Kommunikationspfad bestimmt ist, wobei eine Weiterleiteinrichtung der Datenverarbeitungsanlage ausgebildet ist, zum Aufbau einer Botschaft, die Priorität der Botschaft abhängig von einer Regel zu bestimmen, die der Kennung der Botschaft einen Wert für die Priorität zuordnet. Diese Datenverarbeitungsanlage ist besonders flexibel und weist auch die bereits angeführten Vorteile auf.

Vorzugsweise ist die Weiterleiteinrichtung ausgebildet die Kennung der Botschaft zu bestimmen, und den Zugang zum Kommunikationspfad abhängig von der Kennung der Botschaft zu gewähren oder zu verweigern.

Vorzugsweise löst eine erste Anfrage nach dem Kommunikationspfad in einer Abstraktionsschicht der Datenverarbeitungsanlage eine zweite Anfrage nach einer Kommunikationsressource für den Kommunikationspfad aus, wobei die Regel abhängig von der zweiten Anfrage bestimmt wird. Die Einbringung einer Abstraktionsschicht abstrahiert zudem das eigentliche Verfahren, so dass die beteiligte Applikation bzw. deren Entwickler keine Informationen bzgl. des aktuellen Zustands des Fahrzeugnetzwerks verarbeiten muss.

Vorzugsweise stellt in der Datenverarbeitungsanlage eine Applikation Nutzdaten für die Botschaft bereit, wobei die erste Anfrage durch die Applikation erfolgt. Vorzugsweise ist die Abstraktionsschicht ausgebildet, die erste Anfrage nach dem Kommunikationspfad zu empfangen, abhängig von der ersten Anfrage eine Kommunikationsressource für den Kommunikationspfad zu bestimmen, und die zweite Anfrage nach der Kommunikationsressource zu senden.

Vorzugsweise ist eine Verwaltungseinrichtung ausgebildet, die zweite Anfrage nach der Kommunikationsressource zu empfangen, mindestens eine Regel abhängig von der zweiten Anfrage nach der Kommunikationsressource zu bestimmen, und die Regel in einer Anweisung zu senden. Die Verwaltungseinrichtung kommuniziert mit der Abstraktionsschicht und bestimmt die Regel unabhängig von der Applikation. Dadurch wird die Verwaltung der Kommunikationsressourcen abstrahiert.

Vorzugsweise ist die Verwaltungseinrichtung ausgebildet, mindestens eine Regel für mindestens einen Kommunikationspfad zu verändern, wobei der mindestens eine Kommunikationspfad bereits zur Übertragung von Botschaften verwendet wird, und gemäß der veränderten Regel entweder das Übertragen von Botschaften gestoppt wird, oder mit veränderter Priorität erfolgt. Dadurch wird erforderlichenfalls eine bestehende Konfiguration verändert, um Ressourcen für einen neuen Konfigurationspfad bereitzustellen. Dazu greift die Verwaltungseinrichtung in einem CAN Netzwerk in den Buszugriff und die Buszugriffpriorität ein, um beispielsweise aktiv die Arbitrierung und damit die Buslast und Latenzen zu beeinflussen. Vorzugsweise wird dazu der aktuelle Zustand eines Netzwerkknotens des CAN Netzwerks von der Verwaltungseinrichtung beobachtet oder überwacht.

Weitere vorteilhafte Weiterbildungen ergeben sich aus den Unteransprüchen und den im Folgenden beschriebenen Ausführungsbeispielen.

Es zeigen
- Figur 1: schematisch einen Teil einer Datenverarbeitungsanlage,
- Figur 2: schematisch ein Sequenzprotokoll betreffend ein Management-Protokoll,
- Figur 3: schematisch ein Flussdiagramm betreffend das Management-Protokoll,
- Figur 4: schematisch einen Teil einer Botschaft,
- Figur 5: schematisch ein Flussdiagramm betreffend ein Sendeverfahren.

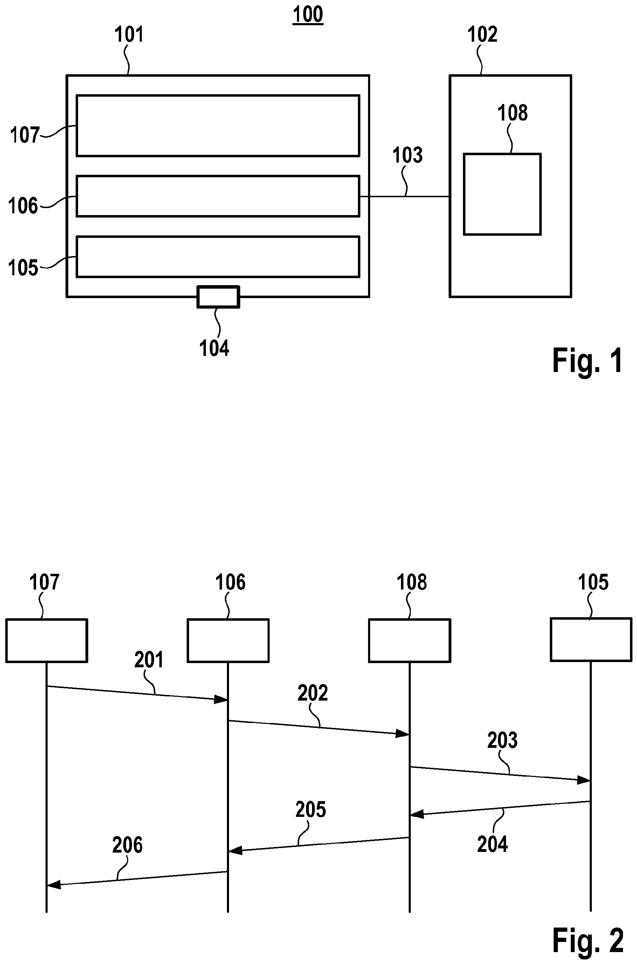

Figur 1 stellt schematisch einen Teil einer Datenverarbeitungsanlage 100 dar. Die Datenverarbeitungsanlage 100 umfasst ein erstes Steuergerät 101 und ein zweites Steuergerät 102, die über eine Datenleitung 103 zum Datenaustausch verbindbar sind.

Das erste Steuergerät 101 umfasst eine Kommunikationseinrichtung 104, beispielsweise eine Controller Area Network, CAN, Schnittstelle nach dem bekannten Standard ISO 11898. Die Datenleitung 103 ist in Figur 1 schematisch dargestellt. Es kann sich um eine physikalische Datenleitung handeln, die beispielsweise über die Kommunikationseinrichtung 104 realisiert wird. Weitere Steuergeräte sind beispielsweise wie das erste Steuergerät 101 aufgebaut und mit diesem über die CAN-Schnittstelle und/oder mit dem zweiten Steuergerät 102 verbunden.

Das erste Steuergerät 101 umfasst eine Weiterleiteinrichtung 105. Die Weiterleiteinrichtung 105 ist zum Datenaustausch mit der Kommunikationseinrichtung 104 ausgebildet, und umgekehrt.

Das erste Steuergerät 101 umfasst eine Abstraktionsschicht 106. Die Abstraktionsschicht 106 ist zum Datenaustausch mit der Kommunikationseinrichtung 104 ausgebildet, und umgekehrt.

Das erste Steuergerät 101 umfasst eine Applikation 107. Die Applikation 107 ist zum Datenaustausch mit der Abstraktionsschicht 106 ausgebildet, und umgekehrt.

Das zweite Steuergerät 102 umfasst beispielsweise eine Verwaltungseinrichtung 108. Die Verwaltungseinrichtung 108 ist beispielsweise ausgebildet, eine Kommunikation zwischen verteilten Applikationen 107 mit garantierten maximalen Buslasten und bestmöglichen Latenzen zu ermöglichen. Dazu werden vorzugsweise ein Zugang zur Kommunikationseinrichtung 104 und/oder eine Priorität für den Zugang zur Kommunikationseinrichtung 104 durch den Verwaltungseinrichtung 108 geregelt. Die Verwaltungseinrichtung 108 kann vorzugsweise die Kommunikation mehrere Steuergeräte beeinflussen.

Die Entscheidung welche Applikation 107 wann Zugang zur Kommunikationseinrichtung 104 erhält, ist applikationsspezifisch. Unabhängig davon, welche Applikation wann Zugang erhalten soll, werden im Folgenden Schritte eines Sequenzprotokolls betreffend ein Management-Protokoll zur Umsetzung der Kommunikation anhand Figur 2 beschrieben.

Zunächst wird von der Applikation 107 eine erste Anfrage 201, nach einem Kommunikationspfad an die Abstraktionsschicht 106 gesendet. Die Applikation 107 fordert damit einen neuen Kommunikationspfad bei der auf dem Steuergerät 101 befindlichen Abstraktionsschicht 106 an. Bei Empfang der ersten Anfrage 201 berechnet die Abstraktionsschicht 106 hieraus die für den Kommunikationspfad benötigten Kommunikationsressourcen, beispielsweise Latenz und Bandbreite. Anschließend sendet die Abstraktionsschicht 106 eine zweite Anfrage 202 nach Kommunikationsressourcen an den Verwaltungseinrichtung 108. Damit fragt die Abstraktionsschicht 106 diese Kommunikationsressourcen bei der Verwaltungseinrichtung 108 an.

Bei Empfang der zweiten Anfrage 202 bestimmt die Verwaltungseinrichtung 108 eine Forwarding Regel. Die Forwarding Regel wird als Anweisung 203 an die Weiterleiteinrichtung 105 gesendet. Vorzugsweise wird eine Priorität für Botschaften, die über den angefragten Kommunikationspfad gesendet werden sollen hinzugefügt und mit der Anweisung 203 an die Weiterleiteinrichtung 105 gesendet. Bevor die Verwaltungseinrichtung 108 diese Ressourcen bestätigt, wird mindestens eine neue Forwarding Regel an mindestens eine Weiterleiteinrichtung 105 gesendet, die vom neuen Kommunikationspfad betroffen ist. Vorzugsweise wird die Anweisung 203 an alle Weiterleiteinrichtungen 105 gesendet, die vom Kommunikationspfad betroffen sind.

Bei Empfang der Anweisung 203 liest die Weiterleiteinrichtung 105 die Forwarding Regel und konfiguriert den Zugriff und/oder die Priorität des Zugriffs auf die Kommunikationseinrichtung 104 abhängig von der Forwarding Regel. Vorzugsweise wird dazu die Priorität und Kennung für die Botschaften aus der Anweisung 203 gelesen.

Optional sendet die Weiterleiteinrichtung 105 eine erste Bestätigung 204. Bei optionalem Empfang der ersten Bestätigung 204 sendet die Verwaltungseinrichtung 108 optional eine zweite Bestätigung 205 an die Abstraktionsschicht 106 weiter. Somit bestätigt die Verwaltungseinrichtung 108 optional eine Reservierung gegenüber der Abstraktionsschicht 106. Bei Empfang der optionalen zweiten Bestätigung 205 leitet die Abstraktionsschicht 107 die zweite Bestätigung 205 optional als dritte Bestätigung 206 an die Applikation 107 weiter. Dadurch wird der Kommunikationspfad optional gegenüber der Applikation 107 bestätigt. Die Applikation 107 kann nun den gewünschten Kommunikationspfad nutzen.

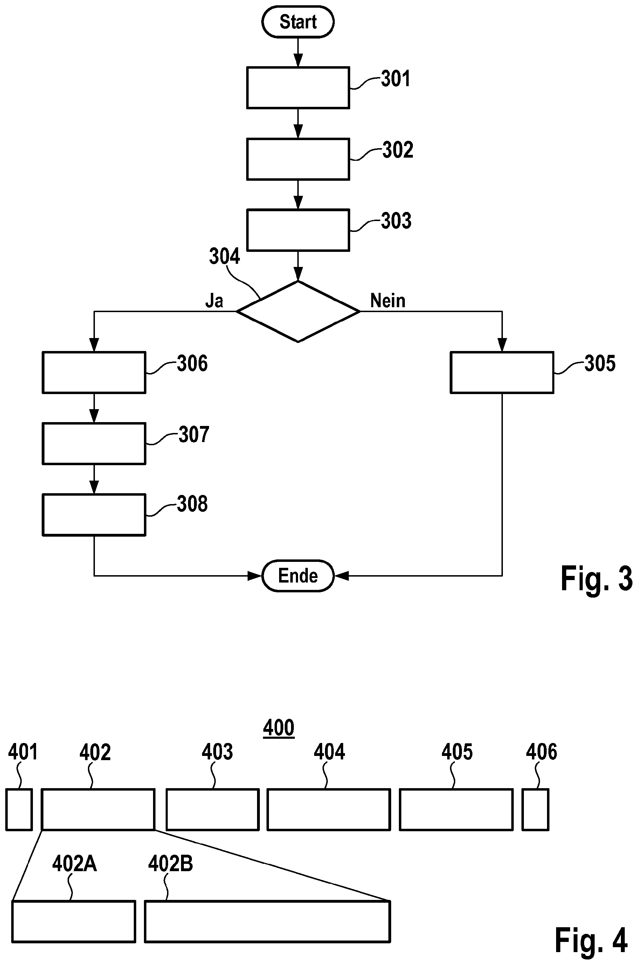

Figur 3 stellt schematisch ein Flussdiagramm mit einem Ablauf eines Verfahrens betreffend das Management-Protokoll dar. Beispielsweise läuft dieses Verfahren in der Abstraktionsschicht 107 und der Verwaltungseinrichtung 108 ab. Nach dem Start wird in einem Schritt 301 die zweite Anfrage 202 über den Kommunikationspfad erhalten. Das Verfahren dient dem Aufbau von Botschaften.

Anschließend wird in einem Schritt 302 abhängig von der zweiten Anfrage 202 eine Anforderung bezüglich der erforderlichen Kommunikationsressourcen, beispielsweise erforderliche Kommunikationsbandbreite oder maximal erlaubte Latenz, abgeleitet.

Anschließend werden in einem Schritt 303 verfügbare Kommunikationsressourcen bestimmt. Dazu wird die Verfügbarkeit von Kommunikationsressourcen geprüft. Beispielsweise wird eine momentan verfügbare Kommunikationsbandbreite oder tatsächliche Latenz ermittelt.

Anschließend wird in einem Schritt 304 ein Vergleich der verfügbaren Kommunikationsressourcen mit den erforderlichen Kommunikationsressourcen durchgeführt. Abhängig vom Ergebnis des Vergleichs wird festgestellt, ob die angefragten Kommunikationsressourcen verfügbar sind.

Wenn die angefragten Kommunikationsressourcen nicht verfügbar sind, wird ein Schritt 305 ausgeführt. Anderenfalls wird ein Schritt 306 ausgeführt.

Im Schritt 305 wird der Antrag abgelehnt. Dazu wird beispielsweise als Forwarding Regel das Senden aller Botschaften 400 mit der Kennung der anfragenden Applikation 107 verboten. Optional kann eine Ablehnung anstelle der zweiten Bestätigung 205 gesendet werden. In diesem Fall kann anstelle der dritten Bestätigung 206 ein Weiterleiten der Ablehnung vorgesehen sein.

Anschließend endet das Verfahren.

Im Schritt 306 wird eine Forwarding Regel bestimmt. Vorzugsweise wird die Forwarding Regel berechnet. Beispielsweise wird abhängig von der Forwarding Regel eine Priorität beispielsweise nach Standard ISO 11898-1:2015 festgelegt. Anstelle dieses Standards kann auch eine ältere oder neuere Version dieses Standards verwendet werden. Einzelne Aspekte können auch nach einem der Standards ISO 11898-2 bis ISO 11898-6 in einer dazu passenden Version ausgeführt sein. Im Folgenden Beispiel wird eine derartige Implementierung mit ISO 11898 bezeichnet. D.h. durch die Forwarding Regel wird festgelegt, dass in einem Prioritätsfeld einer über die Kommunikationseinrichtung 104 zu übertragende Botschaft, eine Priorität nach ISO 11898 einzutragen ist. Die Forwarding Regeln können allgemein eine Zuordnung eines entsprechenden Werts eines Control Fields der zu übertragenden Botschaft beinhalten.

Anschließend wird in einem Schritt 307 die Forwarding Regel ausgerollt. Dazu wird beispielsweise die Anweisung 203 gesendet. Bei erfolgreicher Anfrage wird so durch die Verwaltungseinrichtung 108 ein neuer Kommunikationspfad konfiguriert. Die Forwarding Regeln sind beispielsweise Weiterleitungsregeln für die Weiterleiteinrichtung des 105 sendenden ersten Steuergeräts 101 sowie Priorisierungsregeln. Optional werden die neue Forwarding Regeln an alle Steuergeräte ausgerollt die von der Umstellung betroffen sind.

Anschließend wird die Anfrage in einem optionalen Schritt 308 bestätigt. Dazu wird beispielsweise die zweite Bestätigung 205 gesendet. Es kann vorgesehen sein, dem anfragenden Steuergerät die Reservierung der Kommunikationsressourcen auf anderen Steuergeräten zu bestätigen.

Anschließend endet das Verfahren.

Eine beispielhafte Botschaft 400 ist in Figur 4 schematisch dargestellt. Figur 4 zeigt den Aufbau eines CAN Frames nach ISO 11898. Die hierin vorgesehenen und nach ISO 11898 nicht weiter eingeschränkten Felder ermöglichen die Kompatibilität zu ISO 11898.

Ein erstes Bitfeld 401 der Botschaft 400 enthält ein Start of Frame, SOF, bit. Das SOF bit markiert den Start der Botschaft 400 und wird beispielsweise zur Synchronisation der Kommunikationseinrichtung verschiedener Steuergeräte beispielsweise eines Fahrzeugnetzwerks verwendet.

Ein an das erste Bitfeld 401 anschließendes zweites Bitfeld 402 enthält einen Kopfteil. Bei CAN Frames nach ISO 11898 ist beispielsweise ein Kopfteil mit 11 bit oder 29 bit vorgesehen. Der Kopfteil nach ISO 11898 gibt eine Priorität vor, mit der eine Botschaft nach ISO 11898 zu senden ist. Je niedriger der Binärwert des Kopfteils ist, desto höher seine Priorität. Im Unterschied dazu, wird das zweite Bitfeld 402 in zwei Felder, ein Prioritätsfeld 402A und ein Botschaftskennungsfeld 402B unterteilt.

Das Prioritätsfeld 402A enthält beispielsweise die Priorität. Je niedriger der Binärwert des Prioritätsfeldes 402A ist, desto höher ist im Beispiel seine Priorität. Diese Definition kann auch umgekehrt sein.

Das Botschaftskennungsfeld 402B enthält beispielsweise eine Kennung als Information über eine Forwarding Regel für die Botschaft 400. Die Kennung kennzeichnet beispielsweise die Botschaft als zu einer bestimmten Applikation 107 zugehörig.

Die Botschaft 400 enthält zudem ein drittes Bitfeld 403, beispielsweise ein Control Field, ein viertes Bitfeld 404, beispielsweise eine Payload, und ein fünftes Bitfeld 405, beispielsweise eine Checksumme mit Acknowledgement. Die Botschaft 400 endet mit einem sechsten Bitfeld, beispielsweise einem End of Frame, EOF, bit.

Es kann vorgesehen sein, für das Prioritätsfeld 402A und Botschaftskennungsfeld 402B zusammen 11 bit oder 29 bit zu verwenden. In diesem Fall enthält die Botschaft 400 diese Felder 403, 404 und 405 nach ISO 11898. Das Botschaftskennungsfeld 402B und das Prioritätsfeld 402A können zusammen länger oder kürzer als 11 bit oder 29 bit sein. Dann wird die Länge aller Felder der Botschaft 400 anpassend verändert.

Forwarding Regeln sind den Kommunikationspfaden und damit auch den zugehörigen Botschaften zugeordnet. Forwarding Regel werden von der Verwaltungseinrichtung 108 erstellt und anschließend an die Weiterleiteinrichtung 105 wie beschrieben kommuniziert. Die Zuordnung der Botschaft 402 zu einer Forwarding Regel erfolgt in der Weiterleiteinrichtung 105 über das Botschaftskennungsfeld 402B.

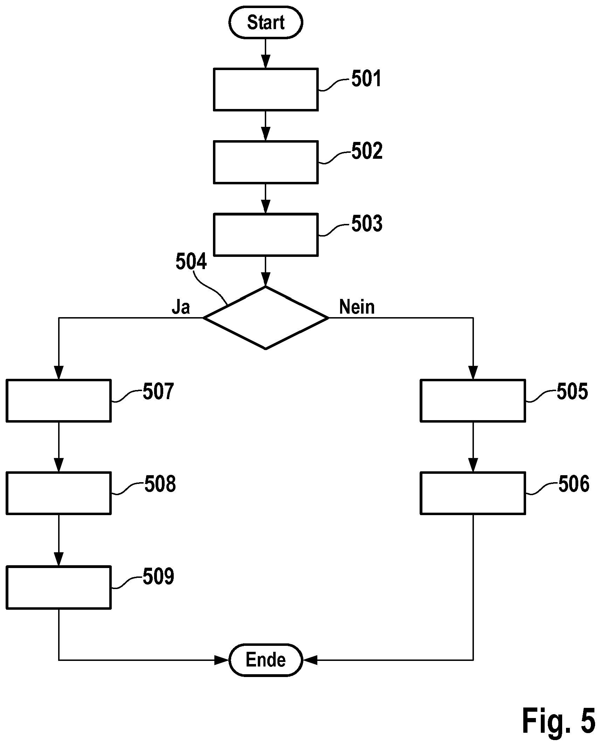

Dies wird im Folgenden anhand Figur 5 beschrieben. Figur 5 stellt schematisch ein Flussdiagramm betreffend ein Sendeverfahren dar. Das Verfahren dient auch dem Aufbau von Botschaften.

In der Weiterleiteinrichtung 105 werden Forwarding Regeln zu Botschaftskennungen zugeordnet. Die Botschaftskennungsfelder 402B sind beispielsweise eindeutig einer Forwarding Regel zugeordnet. Die Weiterleiteinrichtung 105 erkennt beispielsweise anhand einer Bitfolge im Botschaftskennungsfeld 402B die Kennung und findet die Forwarding Regel für die Botschaft 402 beispielsweise in einer Tabelle, die Kennungen den Forwarding Regeln zuordnet.

Nach dem Start wird in einem Schritt 501 von der Applikation 107 ein Datenpaket generiert. Das Datenpaket wird beispielsweise wie die Botschaft 400 strukturiert. Das Botschaftskennungsfeld 402B wird von der Applikation 107 entsprechend so definiert, dass das Datenpaket einer Forwarding Regel zuordenbar ist. Das bedeutet, die Applikation 107 wählt beispielsweise eine Bitfolge aus der Tabelle aller möglichen Bitfolgen aus. Die Tabelle ordnet beispielsweise alle verfügbaren Forwarding Regeln genau einer der möglichen Bitfolgen zu.

Anschließend wird das Datenpaket in einem Schritt 502 an die Abstraktionsschicht 106 übergeben. Die Einbringung einer Abstraktionsschicht 106 abstrahiert das eigentliche Verfahren, so dass die beteiligte Applikation 107 oder deren Entwickler keine Informationen bzgl. des aktuellen Zustands des Fahrzeugnetzwerks verarbeiten muss.

Anschließend wird das Datenpaket in einem Schritt 503 an die Weiterleiteinrichtung 105 übergeben.

Anschließend wird in einem Schritt 504 überprüft, ob die Forwarding Regel das Senden des Datenpakets erlaubt. Dazu wird das Botschaftskennungsfeld 402B aus dem Datenpaket gelesen. Die Weiterleiteinrichtung 105 des Steuergeräts auf dem die Applikation 107 abläuft, prüft anhand der von der Verwaltungseinrichtung 108 übertragenen Forwarding Regeln, ob das Senden des Datenpakets momentan zulässig ist. Ist dies nicht der Fall wird ein Schritt 505 ausgeführt. Sollte das Versenden mit den Forwarding Regeln in Einklang stehen, so wird ein Schritt 507 ausgeführt.

Im Schritt 505 verwirft die Weiterleiteinrichtung 105 das Datenpaket.

In einem optionalen Schritt 506 meldet die Weiterleiteinrichtung 105 diesen Vorgang an die Abstraktionsschicht 106 zurück.

Anschließend endet das Verfahren.

Im Schritt 507 übernimmt die Weiterleiteinrichtung 105 das Datenpaket, und generiert abhängig von der in der Forwarding Regel angegebenen Priorität einen entsprechenden Nachrichten-Kopfteil. Der Nachrichten-Kopfteil umfasst beispielsweise eine Bitfolge, die einen Wert für die Priorität angibt und wird im Prioritätsfeld 402A des Datenpakets mit Struktur der Botschaft 400 eingetragen. Der Nachrichten-Kopfteil kann auch eine Bitfolge nach ISO 11989 darstellen. In diesem Fall wird im Datenpaket das zweite Bitfeld 402 gemäß der Struktur der Botschaft 400 überschrieben. Das resultierende Datenpaket mit Struktur der Botschaft 400 ist kompatibel zu ISO 11989. Die Forwarding Regel ist somit eine Regel, die der Kennung der Botschaft 400 einen Wert für die Priorität zuordnet.

Anschließend wird ein Schritt 508 ausgeführt.

Im Schritt 508 erfolgt das Senden des Datenpakets. Dazu erfolgt beispielsweise eine Bus-Arbitrierung beispielsweise nach ISO 11989 über den Kopfteil im zweiten Bitfeld 402. Botschaften mit einem niedrigen numerischen Wert im Kopfteil haben eine höhere Priorität auf dem Bus. Um diese Priorität zur Laufzeit beeinflussen zu können, wird der vordere Teil des Kopfteil-Felds zum Prioritätsfeld 402A umgewidmet. Dieses Prioritätsfeld wird von der Weiterleiteinrichtung 105 vor dem Senden eines Datenpakets mit dem in der von der Verwaltungseinrichtung 108 in der Forwarding Regel festgelegten Wert belegt. Hierdurch ist sichergestellt, dass das Datenpaket mit der von der Verwaltungseinrichtung 108 berechneten Priorität auf den Bus gelegt wird und somit die Kommunikationsplanung der Verwaltungseinrichtung 108 einhält.

In einem anschließenden optionalen Schritt 509 wird der Sendevorgang an die Abstraktionsschicht bestätigt.

Anschließend endet das Verfahren.

Verwaltungseinrichtung 108, Weiterleiteinrichtung 105, Abstraktionsschicht 106 und Applikation 107 umfassen beispielsweise Hardware oder Software zum Datenaustausch. Applikation 107 umfasst zudem eine Anwendung oder mehrere Anwendungen, die ausgebildet ist, über die Kommunikationseinrichtung 104 mit anderen Anwendungen zu kommunizieren, die auf anderen Steuergeräten ablaufen. Die Hardware umfasst beispielsweise einen Prozessor zum Ausführen von Instruktionen, und einen Speicher der die Instruktionen enthält. Der Speicher enthält beispielsweise zumindest Teile von Instruktionen des Management-Protokolls zum Datenaustausch über die Datenleitung 103. Die Datenleitung 103 ist beispielsweise eine virtuelle Verbindung, die physikalisch mittels Kommunikationseinrichtung 104 hergestellt wird. In diesem Fall kann eine Priorisierung diesbezüglicher Kommunikation vorgesehen sein. Die Verfahren können als Computerprogramm implementiert sein.

Die Verwaltungseinrichtung 108 ist beispielsweise ein Software Defined Networking, SDN, Controller oder ein Time Sensitive Networking, TSN, Controller. Der SDN Controller ist beispielsweise nach dem bekannten OpenFlow Protokoll implementiert. Der TSN Controller implementiert beispielsweise eine Erweiterung des Bridging-Standards IEEE 802.1Q. Diese Erweiterungen adressieren vor allem die Übertragung mit sehr geringer Übertragungslatenz und hoher Verfügbarkeit.

Mögliche alternative Ausgestaltungen sind im Folgenden Aufgeführt:
1) Mischbetrieb mit statischer CAN-Matrix:
   Liegt eine statische CAN-Matrix vor, kann diese Matrix dem SDN Controller 108 bekannt sein, beispielsweise durch Bedatung oder Beobachtung des Netzwerks.
   Hierdurch kann auch die Verwaltungseinrichtung 108 die genutzten Kommunikationsressourcen bestimmen und bei ihrer Planung berücksichtigen. Die Weiterleiteinrichtungen 105 kennen diese statischen Kommunikationsbeziehungen ebenfalls und lassen entsprechende Datenpakete passieren. Die Verwaltungseinrichtung 108 verwaltet die noch verbliebenen Bus-Ressourcen durch das bereits beschriebene Verfahren.
2) Für die dynamische Anpassung der Priorität der Botschaften 400 kann der ganze CAN Kopfteil, 11 bit oder 29 Bit bei extended Kopfteil, oder nur ein Teil davon genutzt werden. Wird der ganze CAN Kopfteil dynamisch vergeben, so geschieht die Identifizierung des Dateninhalts über zusätzliche Information im Payload der Nachricht. Wird nur ein Teil des CAN Kopfteils für die dynamische Priorisierung verwendet, beispielsweise die ersten X Bits, so können die restlichen Bits für eine statische Identifizierung des Nachrichteninhalts verwendet werden, d.h. z.B. als Message oder Service Kopfteil.
3) Die Verwaltungseinrichtung 108 kann angefragt werden, wenn eine Applikation 107 beginnen möchte Daten zu senden. Die Verwaltungseinrichtung 108 kann auch im Rahmen einer Service Discovery angefragt werden. Service Discovery bedeutet, dass eine anfragende Applikation 107 auf einem Steuergerät einen Service sucht, der noch nicht auf dem CAN Netzwerk versendet wird. In diesem Fall kann die Verwaltungseinrichtung 108 ausgebildet sein zu steuern, ob dieser Service der anfragenden Applikation 107 angeboten wird. Diese Entscheidung wird vorzugsweise basierend auf einer Priorität des Services und einer für den Service benötigten Bandbreite getroffen. Der Service wird beispielsweise von einer den Service anbietenden Applikation 107 durch das Senden von Datenpaketen über den Kommunikationspfad realisiert.
4) Bei einer Kommunikation basierend auf einem publish/subscribe Prinzip sendet ein Anbieter eines Services erst Datenpakete, wenn sich ein Abnehmer anmeldet. Anbieter ist beispielsweise die Applikation 107 auf dem Steuergerät 101. Abnehmer ist beispielsweise eine andere Applikation 107 auf einem anderen Steuergerät. Der Kommunikationspfad verbindet die Applikation 107 mit der anderen Applikation.
   Der Abnehmer meldet sich beispielsweise über die Verwaltungseinrichtung 108 gesteuert und nicht direkt beim Anbieter an. Wenn der Abnehmer den Service abonnieren möchte, dieser jedoch noch nicht auf dem CAN Netzwerk versendet wird, dann entscheidet beispielsweise die Verwaltungseinrichtung 108 aufgrund einer Priorität des Services und einer momentan vorhandenen Bandbreite, ob die Anfrage zum Anbieter weitergeleitet wird.
5) Es kann ein Abkündigen eines genutzten Services bei Bedarf an einem Service mit höherer Priorität vorgesehen sein. Sollte der mittels der Service Discovery angefragte Service die momentan vorhanden Bandbreite übersteigen, wird in diesem Fall die benötigte Bandbreite durch Abkündigen genutzter Services mit niedrigerer Priorität reserviert werden. Dazu werden die Anbieter der bisherigen genutzten Services aufgefordert ihr Angebot zurückzuziehen. Der Anbieter, d.h. die Weiterleiteinrichtung 105 die Datenpakete der Applikation 107 zum Versandt anbietet, bestimmt damit mit der entsprechenden Ankündigung, dass der Service nicht länger verfügbar ist.
6) Zur Sicherstellung der Security kann eine rollenbasierte Autorisierung vorgesehen sein. Hierdurch kann sichergestellt werden das nur berechtigte Knoten Kommunikationspfade anfragen können.
7) Zudem kann ein Beobachter vorgesehen sein, der Anomalien beispielsweise in einem Kommunikationspfad erkennt und ausgebildet ist bei Detektion der Anomalie als Angriffsmuster eine abwehrende Maßnahme zu ergreifen.
   Der Beobachter ist beispielsweise im Steuergerät 101 oder in einem anderen über das CAN Netzwerk verbundenem Steuergerät implementiert. Der Beobachter ist vorzugsweise ausgebildet, die Konfiguration des CAN-Netzwerks zu testen. Dazu kann ein versuchtes Verschicken von nicht registrierten Nachrichten vorgesehen sein. In diesem Fall kann eine Überprüfung vorgesehen sein, durch die eine Ablehnung der nicht registrierten Nachrichten erkannt wird. Sollte eine nicht registrierte Nachricht nicht abgelehnt werden, wird vorzugsweise eine Anomalie erkannt. Registrierte Nachricht bedeutet hierbei beispielsweise, dass es sich um ein Datenpaket handelt, dessen Botschaftskennungsfeld 402B eine Bitfolge aufweist, die einer der Forwarding Regeln zuordenbar ist.
8) Die Verwaltungseinrichtung 108 muss nicht in dem CAN Netzwerk sein, in dem das Steuergerät 101 ist. Die Verwaltungseinrichtung 108 muss nicht zwingend Teil des zu verwaltenden CAN Netzwerks sein sondern kann auch über Gateways und andere Kommunikationstechnologien/ -Protokolle angebunden sein.
9) Es kann ein Einsatz der Verwaltungseinrichtung 108 in einem Gesamtnetzwerk mit Teilnetzen vorgesehen sein. Bei verbundenen Netzwerken kann es verschiedene Konfiguration bzgl. der Anordnung von mehreren Verwaltungseinrichtungen 108 geben.

Diese können zentralisiert angeordnet sein. In diesem Fall verfügt der Netzwerkverbund über eine zentrale Verwaltungseinrichtung 108.

Es kann auch eine primärer Verwaltungseinrichtung 108 und mindestens eine weitere Verwaltungseinrichtung 108 vorgesehen sein, welcher im Falle eines Ausfalls der primären Verwaltungseinrichtung 108 die primäre Verwaltungseinrichtung 108 ersetzt.

Die Teilnetzwerke können jeweils über eine eigene Verwaltungseinrichtung 108 verfügen. Die verschiedenen Verwaltungseinrichtungen 108 können in diesem Falle auch Daten untereinander austauschen. Es kann eine hierarchisch übergeordnete zentrale Verwaltungseinrichtung 108 vorgesehen sein, der alle anderen Verwaltungseinrichtungen 108 unterstehen. Die zentrale Verwaltungseinrichtung 108 kann wiederum durch eine Backup Verwaltungseinrichtung 108 abgesichert sein.

Ein derartiges Netzwerk kann aus verschiedenen Gründen umkonfiguriert werden.

Beispielsweise sind neue Kommunikationspfade für Software oder Firmware Updates kabelgebunden in einer Werkstatt oder "Over-the-Air" erforderlich. Zusätzliche Kommunikationspfade können beispielsweise bei Nachrüstung oder temporäre Ausstattung mit Sensorik, Aktuatorik erforderlich sein. Auch das optionale Verwenden aktiv gelenkter Anhänger mit Einparkassistenz, oder ein Freischalten von zusätzlichen Funktionen in einem Fahrzeug in dem das Steuergerät 101 angeordnet ist, kann neue Kommunikationspfade erfordern. Beispielsweise werden Kommunikationspfade für eine nachträgliche Freischaltung einer Tempomatfunktion im Steuergerät 101 erforderlich. Zusätzliche After-Market Software, beispielsweise über sogenannte App-Stores können ebenfalls neue Kommunikationspfade erfordern. Weitere flexible Kommunikationsprotokolle, wie beispielsweise serviceorientierte Kommunikation, die teilweise bereits in AUTOSAR standardisiert wurde, können ebenfalls zur Konfiguration neuer Konfigurationspfade führen.

Auch das dynamische Senden von Daten aus einem Fahrzeugnetzwerk in eine Cloud, beispielsweise für Big Data Services, Debugging oder Diagnose im Feld, kann neue Konfigurationspfade erfordern.

Ein partielles Abschalten von einzelnen Steuergeräten innerhalb eines Netzwerks um Energie zu sparen kann ebenfalls eine Veränderung der Kommunikationspfade auslösen.

## Patentansprüche

1. Verfahren zum Aufbau von Botschaften für eine Datenverarbeitungsanlage (100), insbesondere für Kraftfahrzeuge, in der Botschaften (400) über mindestens einen Kommunikationspfad der Datenverarbeitungsanlage (100) übertragbar sind, wobei die Botschaften (400) einen Kopfteil (402) umfassen, der zumindest teilweise als Identifizierer der Botschaft (400) ausgebildet ist, der zumindest eine Priorität (402A) festlegt, und wobei die Botschaft (400) eine Kennung (402B) der Botschaft (400) enthält, wobei durch die Prioriät (402A) der Zugang zum Kommunikationspfad bestimmt ist, **dadurch gekennzeichnet, dass** die Priorität (402A) der Botschaft (400) abhängig von einer Regel bestimmt wird, die der Kennung (402B) der Botschaft (400) einen Wert für die Priorität (402A) zuordnet.

2. Verfahren nach Anspruch 1, **dadurch gekennzeichnet, dass** die Kennung (402B) der Botschaft (400) bestimmt wird, und der Zugang zum Kommunikationspfad abhängig von der Kennung (402B) der Botschaft (400) gewährt (507) oder verweigert (505) wird.

3. Verfahren nach einem der Ansprüche 1 oder 2, **dadurch gekennzeichnet, dass** eine erste Anfrage (201) nach dem Kommunikationspfad eine zweite Anfrage (202) nach einer Kommunikationsressource für den Kommunikationspfad auslöst, wobei die Regel abhängig von der zweiten Anfrage (202) bestimmt (306) wird.

4. Verfahren nach Anspruch 3, **dadurch gekennzeichnet, dass** eine Applikation (107) Nutzdaten (404) für die Botschaft (400) bereitstellt (501), wobei die erste Anfrage (201) durch die Applikation (107) erfolgt.

5. Verfahren nach Anspruch 3 oder 4, **dadurch gekennzeichnet**, eine Abstraktionsschicht (106) die erste Anfrage (201) nach dem Kommunikationspfad empfängt (301), abhängig von der ersten Anfrage (201) eine Kommunikationsressource für den Kommunikationspfad bestimmt (302), und die zweite Anfrage (202) nach der Kommunikationsressource sendet (303).

6. Verfahren nach einem der Ansprüche 3 bis 5, **dadurch gekennzeichnet, dass** eine Verwaltungseinrichtung (108) die zweite Anfrage (202) nach der Kommunikationsressource empfängt (303), die Verfügbarkeit der Kommunikationsressource prüft, die Regel abhängig von der zweiten Anfrage (202) nach der Kommunikationsressource bestimmt (306), und die Regel in einer Anweisung (203) sendet (307).

7. Verfahren nach einem der vorherigen Ansprüche, **dadurch gekennzeichnet, dass** mindestens eine Regel für mindestens einen Kommunikationspfad verändert wird, wobei der mindestens einen Kommunikationspfad bereits zur Übertragung von Botschaften (400) verwendet wird, und gemäß der veränderten Regel entweder das Übertragen von Botschaften (400) gestoppt wird, oder mit veränderter Priorität (402A) erfolgt.

8. Datenverarbeitungsanlage (100), insbesondere für Kraftfahrzeuge, in der Botschaften (400) über mindestens einen Kommunikationspfad der Datenverarbeitungsanlage (100) übertragbar sind, wobei die Botschaften (400) einen Kopfteil (402) umfassen, der zumindest teilweise als Identifizierer der Botschaft (400) ausgebildet ist, der zumindest eine Priorität (402A) festlegt, und wobei die Botschaft (400) eine Kennung (402B) der Botschaft (400) enthält, wobei durch die Prioriät (402A) der Zugang zum Kommunikationspfad bestimmt ist, **dadurch gekennzeichnet, dass** eine Weiterleiteinrichtung (105) der Datenverarbeitungsanlage (100) ausgebildet ist, zum Aufbau einer Botschaft (400), die Priorität (402A) der Botschaft (400) abhängig von einer Regel zu bestimmen, die der Kennung (402B) der Botschaft (400) einen Wert für die Priorität (402A) zuordnet.

9. Datenverarbeitungsanlage (100) nach Anspruch 8, **dadurch gekennzeichnet, dass** die Weiterleiteinrichtung (105) ausgebildet ist die Kennung (402B) der Botschaft (400) zu bestimmen, und den Zugang zum Kommunikationspfad abhängig von der Kennung (402B) der Botschaft (400) zu gewähren (507) oder zu verweigern (505).

10. Datenverarbeitungsanlage (100) nach einem der Ansprüche 8 oder 9, **dadurch gekennzeichnet, dass** eine erste Anfrage (201) nach dem Kommunikationspfad in einer Abstraktionsschicht (106) der Datenverarbeitungsanlage (100) eine zweite Anfrage (202) nach einer Kommunikationsressource für den Kommunikationspfad auslöst, wobei die Regel abhängig von der zweiten Anfrage (202) bestimmt wird.

11. Datenverarbeitungsanlage (100) nach Anspruch 10, **dadurch gekennzeichnet, dass** in der Datenverarbeitungsanlage (100) eine Applikation (107) Nutzdaten (404) für die Botschaft (400) bereitstellt, wobei die erste Anfrage (201) durch die Applikation (107) erfolgt.

12. Datenverarbeitungsanlage (100) nach Anspruch 10 oder 11, **dadurch gekennzeichnet, dass** die Abstraktionsschicht (106) ausgebildet ist, die erste Anfrage (201) nach dem Kommunikationspfad zu empfangen, abhängig von der ersten Anfrage (201) eine Kommunikationsressource für den Kommunikationspfad zu bestimmen, und die zweite Anfrage (202) nach der Kommunikationsressource zu senden.

13. Datenverarbeitungsanlage (100) nach einem der Ansprüche 10 bis 12, **dadurch gekennzeichnet, dass** eine Verwaltungseinrichtung (108) ausgebildet ist, die zweite Anfrage (202) nach der Kommunikationsressource zu empfangen, die Verfügbarkeit der Kommunikationsressource zu prüfen, mindestens eine Regel abhängig von der zweiten Anfrage (202) nach der Kommunikationsressource zu bestimmen, und die Regel in einer Anweisung (203) zu senden.

14. Datenverarbeitungsanlage (100) nach Anspruch 13, **dadurch gekennzeichnet, dass** die Verwaltungseinrichtung (108) ausgebildet ist, mindestens eine Regel für mindestens einen Kommunikationspfad zu verändern, wobei der mindestens eine Kommunikationspfad bereits zur Übertragung von Botschaften (400) verwendet wird, und gemäß der veränderten Regel entweder das Übertragen von Botschaften (400) gestoppt wird, oder mit verändertem Kopfteil (402) erfolgt.

15. Computerprogramm ausgebildet das Verfahren nach einem der Ansprüche1 bis 7 auszuführen.

## Claims

1. Method for setting up messages for a data processing installation (100), in particular for motor vehicles, in which messages (400) are able to be transmitted via at least one communication path of the data processing installation (100), wherein the messages (400) comprise a header part (402), at least part of which is in the form of an identifier of the message (400) that defines at least one priority (402A), and wherein the message (400) contains an identifier (402B) of the message (400), the priority (402A) determining access to the communication path, **characterized in that** the priority (402A) of the message (400) is determined on the basis of a rule that assigns a value for the priority (402A) to the identifier (402B) of the message (400).

2. Method according to Claim 1, **characterized in that** the identifier (402B) of the message (400) is determined, and access to the communication path is granted (507) or denied (505) on the basis of the identifier (402B) of the message (400).

3. Method according to either of Claims 1 and 2, **characterized in that** a first request (201) for the communication path triggers a second request (202) for a communication resource for the communication path, the rule being determined (306) on the basis of the second request (202).

4. Method according to Claim 3, **characterized in that** an application (107) provides (501) payload data (404) for the message (400), the first request (201) being made by the application (107).

5. Method according to Claim 3 or 4, **characterized in that** an abstraction layer (106) receives (301) the first request (201) for the communication path, determines (302) a communication resource for the communication path on the basis of the first request (201), and sends (303) the second request (202) for the communication resource.

6. Method according to one of Claims 3 to 5, **characterized in that** a management device (108) receives (303) the second request (202) for the communication resource, checks the availability of the communication resource, determines (306) the rule on the basis of the second request (202) for the communication resource, and sends (307) the rule in an instruction (203).

7. Method according to one of the preceding claims, **characterized in that** at least one rule is altered for at least one communication path, the at least one communication path already being used for transmitting messages (400), and, according to the altered rule, the transmission of messages (400) is either stopped or takes place with altered priority (402A).

8. Data processing installation (100), in particular for motor vehicles, in which messages (400) are able to be transmitted via at least one communication path of the data processing installation (100), wherein the messages (400) comprise a header part (402), at least part of which is in the form of an identifier of the message (400) that defines at least one priority (402A), and wherein the message (400) contains an identifier (402B) of the message (400), the priority (402A) determining access to the communication path, **characterized in that** a forwarding device (105) of the data processing installation (100) is designed to set up a message (400) by determining the priority (402A) of the message (400) on the basis of a rule that assigns a value for the priority (402A) to the identifier (402B) of the message (400).

9. Data processing installation (100) according to Claim 8, **characterized in that** the forwarding device (105) is designed to determine the identifier (402B) of the message (400) and to grant (507) or to deny (505) access to the communication path on the basis of the identifier (402B) of the message (400).

10. Data processing installation (100) according to either of Claims 8 and 9, **characterized in that** a first request (201) for the communication path in an abstraction layer (106) of the data processing installation (100) triggers a second request (202) for a communication resource for the communication path, the rule being determined on the basis of the second request (202).

11. Data processing installation (100) according to Claim 10, **characterized in that** an application (107) in the data processing installation (100) provides payload data (404) for the message (400), the first request (201) being made by the application (107).

12. Data processing installation (100) according to Claim 10 or 11, **characterized in that** the abstraction layer (106) is designed to receive the first request (201) for the communication path, to determine a communication resource for the communication path on the basis of the first request (201), and to send the second request (202) for the communication resource.

13. Data processing installation (100) according to one of Claims 10 to 12, **characterized in that** a management device (108) is designed to receive the second request (202) for the communication resource, to check the availability of the communication resource, to determine at least one rule on the basis of the second request (202) for the communication resource, and to send the rule in an instruction (203).

14. Data processing installation (100) according to Claim 13, **characterized in that** the management device (108) is designed to alter at least one rule for at least one communication path, the at least one communication path already being used for transmitting messages (400), and, according to the altered rule, the transmission of messages (400) is either stopped or takes place with an altered header part (402).

15. Computer program designed to carry out the method according to one of Claims 1 to 7.

## Revendications

1. Procédé permettant d'établir des messages pour une installation de traitement de données (100), en particulier pour des véhicules automobiles, dans laquelle des messages (400) peuvent être transmis par au moins une voie de communication de l'installation de traitement de données (100), les messages (400) comprenant un en-tête (402) qui est réalisé au moins partiellement comme un moyen d'identification du message (400) qui fixe au moins une priorité (402A), et dans lequel le message (400) contient un identifiant (402B) du message (400), dans lequel la priorité (402A) détermine l'accès à la voie de communication,
**caractérisé en ce que** la priorité (402A) du message (400) est déterminée en fonction d'une règle qui associe à l'identifiant (402B) du message (400) une valeur pour la priorité (402A).

2. Procédé selon la revendication 1, **caractérisé en ce que** l'identifiant (402B) du message (400) est déterminé, et l'accès à la voie de communication est autorisé (507) ou refusé (505) en fonction de l'identifiant (402B) du message (400).

3. Procédé selon l'une quelconque des revendications 1 ou 2, **caractérisé en ce qu'**une première demande (201) de voie de communication déclenche une deuxième demande (202) d'une ressource de communication pour la voie de communication, la règle étant déterminée (306) en fonction de la deuxième demande (202).

4. Procédé selon la revendication 3, **caractérisé en ce qu'**une application (107) fournit (501) des données utiles (404) pour le message (400), dans lequel la première demande (201) est effectuée par l'application (107) .

5. Procédé selon la revendication 3 ou 4, **caractérisé en ce qu'**une une couche d'abstraction (106) reçoit (301) la première demande (201) de voie de communication, détermine (302) en fonction de la première demande (201) une ressource de communication pour la voie de communication, et envoie (303) la deuxième demande (202) de ressource de communication.

6. Procédé selon l'une quelconque des revendications 3 à 5, **caractérisé en ce qu'**un dispositif de gestion (108) reçoit (303) la deuxième demande (202) de ressource de communication, vérifie la disponibilité de la ressource de communication, détermine (306) la règle en fonction de la deuxième demande (202) de ressource de communication et envoie (307) la règle dans une instruction (203).

7. Procédé selon l'une quelconque des revendications précédentes, **caractérisé en ce qu'**au moins une règle est modifiée pour au moins une voie de communication, dans lequel ladite au moins une voie de communication est déjà utilisée pour la transmission de messages (400), et selon la règle modifiée, soit la transmission de messages (400) est arrêtée, soit elle est effectuée avec une priorité modifiée (402A).

8. Installation de traitement de données (100), en particulier pour des véhicules automobiles, dans laquelle des messages (400) peuvent être transmis par au moins une voie de communication de l'installation de traitement de données (100), les messages (400) comprenant un en-tête (402) qui est réalisé au moins partiellement comme un moyen d'identification du message (400) qui fixe au moins une priorité (402A), et dans lequel le message (400) contient un identifiant (402B) du message (400), dans lequel la priorité (402A) détermine l'accès à la voie de communication, **caractérisée en ce que** pour l'établissement d'un message (400), un dispositif de retransmission (105) de l'installation de traitement de données (100) est réalisé pour déterminer la priorité (402A) du message (400) en fonction d'une règle qui associe à l'identifiant (402B) du message (400) une valeur pour la priorité (402A).

9. Installation de traitement de données (100) selon la revendication 8, **caractérisée en ce que** le dispositif de retransmission (105) est réalisé pour déterminer l'identifiant (402B) du message (400), et pour autoriser (507) ou refuser (505) l'accès à la voie de communication en fonction de l'identifiant (402B) du message (400).

10. Installation de traitement de données (100) selon l'une quelconque des revendications 8 ou 9, **caractérisée en ce qu'**une première demande (201) de voie de communication dans une couche d'abstraction (106) de l'installation de traitement de données (100) déclenche une deuxième demande (202) d'une ressource de communication pour la voie de communication, la règle étant déterminée en fonction de la deuxième demande (202) .

11. Installation de traitement de données (100) selon la revendication 10, **caractérisée en ce que** dans l'installation de traitement de données (100) une application (107) fournit des données utiles (404) pour le message (400), dans laquelle la première demande (201) est effectuée par l'application (107).

12. Installation de traitement de données (100) selon la revendication 10 ou 11, **caractérisée en ce que** la couche d'abstraction (106) est réalisée pour recevoir la première demande (201) de voie de communication, pour déterminer en fonction de la première demande (201) une ressource de communication pour la voie de communication et pour envoyer une demande (202) de ressource de communication.

13. Installation de traitement de données (100) selon l'une quelconque des revendications 10 à 12, **caractérisée en ce qu'**un dispositif de gestion (108) est réalisé pour recevoir la deuxième demande (202) de ressource de communication, vérifier la disponibilité de la ressource de communication, déterminer au moins une règle en fonction de la deuxième demande (202) de la ressource de communication et envoyer la règle dans une instruction (203).

14. Installation de traitement de données (100) selon la revendication 13, **caractérisée en ce que** le dispositif de gestion (108) est réalisé pour modifier au moins une règle pour au moins une voie de communication, dans lequel ladite au moins une voie de communication est déjà utilisée pour la transmission de messages (400), et selon la règle modifiée, la transmission de messages (400) est soit arrêtée, soit effectuée avec un en-tête (402) modifié.

15. Programme informatique réalisé pour exécuter le procédé selon l'une quelconque des revendications 1 à 7.
